Europäisches Patentamt

European Patent Office

Office européen des brevets

(11) Publication number: **0 332 730**
**A1**

## (12) EUROPEAN PATENT APPLICATION

(21) Application number: **88104299.8**

(22) Date of filing: **18.03.88**

(51) Int. Cl.⁴: **A01G 5/00**

(43) Date of publication of application:
**20.09.89 Bulletin 89/38**

(84) Designated Contracting States:
**AT BE CH DE ES FR GB GR LI LU NL SE**

(71) Applicant: **Grossi, Giacomo**
**Strada Comunale Mirafiori 35/47**
**I-10100 Torino(IT)**

(72) Inventor: **Grossi, Giacomo**
**Strada Comunale Mirafiori 35/47**
**I-10100 Torino(IT)**

(74) Representative: **Lotti, Giorgio**
**c/o Ing. Barzano' & Zanardo S.p.A. Via**
**Cernaia 20**
**I-10122 Torino(IT)**

(54) Implement for the removal of leaves and thorns from flower stalks.

(57) An implement for the removal of leaves and thorns from flower stalks consists of two semicylindrical shells (10, 11) reciprocally hinged along the respective longitudinal edges; in the internal faces of each of them are plates (13, 14), perpendicular to the longitudinal axis of the half shells, and equipped with grooves (15, 16) so that when the half shells are closed to form a cylinder, between such plates a hole is formed having a diameter slightly larger than a flower stalk (19); the half shells are respectively equipped with handles (17, 18) on the external faces in order to allow a firm grip of the closed cylinder.

EP 0 332 730 A1

Fig.3

# IMPLEMENT FOR THE REMOVAL OF LEAVES AND THORNS FROM FLOWER STALKS

The invention refers to an implement suitable for the removal of leaves and thorns from flower stalks.

Florists often have the necessity of removing leaves and thorns from flower stalks in order to gather the flowers into bunches for sale.

This operation usually takes place by tearing away leaves and thorns one by one, with a remarkable waste of time. The invention now proposes an easy-to-employ implement: this is gripped by hand and is placed around the stalk so that leaves and thorns are torn off by sliding the device down along the stalk.

This implement quickly and safely performs an otherwise long and laborious operation.

For these purposes and further ones that will be better appreciated as the description follows, the invention proposes to realize an implement for the removal of leaves and thorns from flower stalks characterized in that it consists of two semicylindrical shells reciprocally hinged along the respective longitudinal edges; in the internal faces of each of them are plates, perpendicular to the longitudinal axis of the half shells, and equipped with grooves so that when the half shells are closed to form a cylinder a hole is formed between them having a diameter slightly larger than a flower stalk.

A description of the implement according to the invention follows, and reference will be made to the enclosed drawings:

Figure 1 is the front view of the implement in open position,

Figure 2 is the back view of the implement in the position of Figure 1,

Figure 3 is the view of the implement during operation.

The implement subject of the invention consists of two semicylinders 10 and 11 reciprocally hinged at 12 so as to form a cylinder when closed.

In the internal faces of both half shells are two plates 13 and 14, perpendicular with respect to the cylinder axis, each of them equipped with substantially circular grooves 15 and 16 so that once the half shells 10 and 11 are being closed, plates 13 and 14 overlap on each other forming a substantially circular hole in correspondence with the respective grooves 15 and 16.

Such hole will have a slightly larger diameter than the ones of the flower stalks usually found for sale.

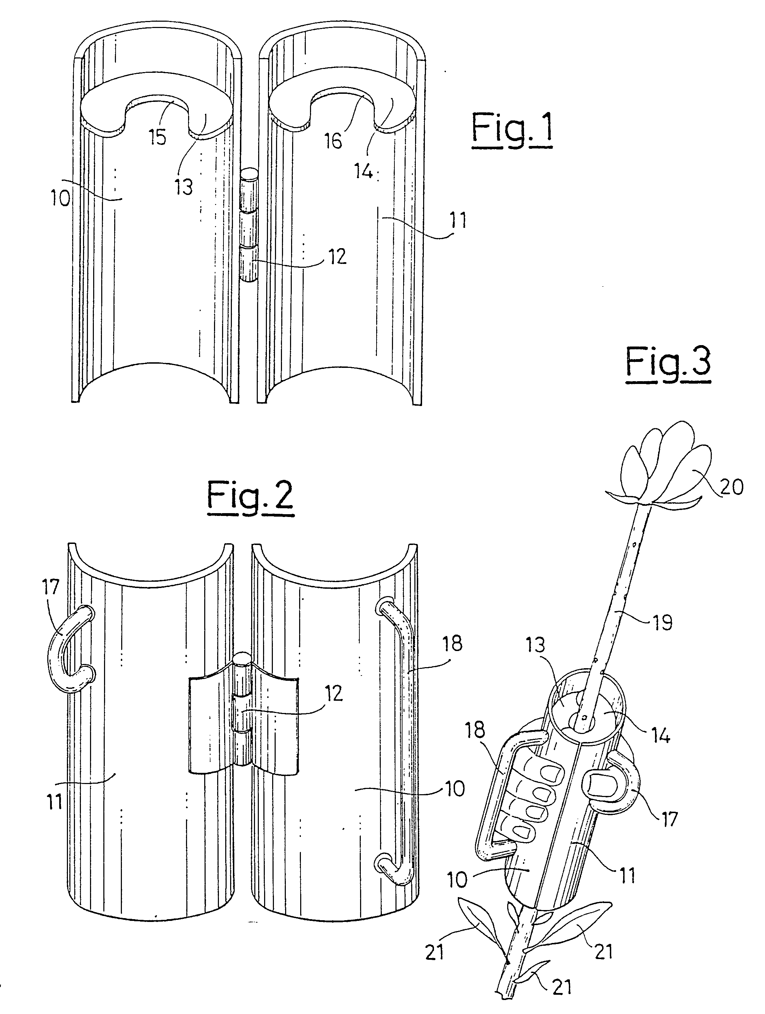

Handles 17 and 18 respectively are attached to the external faces of the half shells, one for the thumb and one for the other fingers of the hand which grips the closed cylinder. During operation, the half shells are being placed around the stalk 19 with the plates 13 and 14 towards the flower 20 and closed on the stalk. As illustrated in Fig. 3, the cylinder thus obtained must be hand gripped and slided towards the bottom so that the leaves and the thorns 21 are being torn off during the descent of the cylinder and the stalk 19 is left perfectly clean.

The cylinder may obviously be applied starting from a lower portion of the stalk 19, that is far from the flower 20, if it is preferred to remove leaves and thorns only from the lower portion of the stalk.

## Claims

1. Implement suitable for the removal of leaves and thorns from flower stalks characterized in that it consists of two semicylindrical shells reciprocally hinged along the respective longitudinal edges, in the internal faces of each of them are plates, perpendicular to the longitudinal axis of the half shells, equipped with grooves so that when the half shells are closed to form a cylinder, between such plates a hole is formed having a diameter slightly larger than a flower stalk.

2. Implement according to claim 1 characterized in that the half shells are respectively equipped with handles on the external faces to allow a firm grip of the closed cylinder.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 874 690 (JEIFETZ)<br>* Page 2, line 31 - page 2, line 99; figures 1-5 * | 1-2 | A 01 G    5/00 |
| Y | US-A-4 550 656 (KIRK)<br>* Column 1, line 62 - column 2, line 26; figure 1 * | 1-2 | |
| A | US-A-1 359 148 (BERTRAND)<br>* Page 1, line 75 - page 2, line 71; figures 1-4 * | 1-2 | |
| A | DE-C- 892 086 (SCHMIDTHAÜSLER)<br>* Whole document * | 1 | |
| A | US-A-2 681 504 (SOL FOX)<br>* Whole document * | 1 | |
| A | FR-A-2 195 391 (VIALENS)<br>* Page 1, line 1 - page 2, line 12; figures 1-4 * | 1-2 | TECHNICAL FIELDS SEARCHED (Int. Cl.4)<br><br>A 01 G<br>A 01 D<br>A 47 J |

The present search report has been drawn up for all claims

| Place of search | Date of completion of the search | Examiner |
|---|---|---|
| THE HAGUE | 09-09-1988 | HERYGERS J.J. |